(19) Europäisches Patentamt
European Patent Office
Office européen des brevets

(11) EP 2 072 575 B1

(12) EUROPEAN PATENT SPECIFICATION

(45) Date of publication and mention of the grant of the patent:
**26.08.2009 Bulletin 2009/35**

(21) Application number: **07024963.6**

(22) Date of filing: **21.12.2007**

(51) Int Cl.:
***C08L 23/04*** *(2006.01)* ***C08L 23/10*** *(2006.01)*
***C08L 51/00*** *(2006.01)* ***C08K 9/04*** *(2006.01)*
***C08K 9/06*** *(2006.01)* *C08L 23/08* *(2006.01)*

(54) **Polypropylene composition comprising a cross-linkable dispersed phase comprising silanol groups containing nanofillers**

Polypropylenzusammensetzung mit einer vernetzbaren dispergierten Phase mit Nanofüllstoffe enthaltenden Silanolgruppen

Composition de polypropylène comprenant une phase dispersée réticulable comprenant des groupes silanol contenant des nanocharges

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**24.06.2009 Bulletin 2009/26**

(73) Proprietor: **Borealis Technology OY**
**06101 Porvoo (FI)**

(72) Inventors:
- **Gahleitner Markus**
**4501 Neuhofen/Krems (AT)**
- **Pham Tung**
**4040 Linz (AT)**
- **Machl Doris**
**4020 Linz (AT)**
- **Andreasson Urban**
**44496 Ödsmal (SE)**
- **Carlsson Roger**
**42370 Säve (SE)**

(74) Representative: **Kador & Partner**
**Corneliusstrasse 15**
**80469 München (DE)**

(56) References cited:
**EP-A- 1 834 987** **WO-A-98/02483**
**US-A- 4 189 550** **US-A1- 2003 050 401**

- **ASO ET AL: "The influence of surface modification on the structure and properties of a nanosilica filled thermoplastic elastomer" COMPOSITES SCIENCE AND TECHNOLOGY, ELSEVIER, vol. 67, no. 13, 24 August 2007 (2007-08-24), pages 2854-2863, XP022211525 ISSN: 0266-3538**
- **NITTA ET AL: "The effect of the addition of silica particles on linear spherulite growth rate of isotactic polypropylene and its explanation by lamellar cluster model" POLYMER, ELSEVIER SCIENCE PUBLISHERS B.V, GB, vol. 47, no. 18, 23 August 2006 (2006-08-23), pages 6457-6463, XP005600864 ISSN: 0032-3861**
- **PAPAGEORGIOU G Z ET AL: "Crystallization kinetics and nucleation activity of filler in polypropylene/surface-treated SiO2 nanocomposites" THERMOCHIMICA ACTA, ELSEVIER SCIENCE PUBLISHERS, AMSTERDAM, NL, vol. 427, no. 1-2, 1 March 2005 (2005-03-01), pages 117-128, XP004729474 ISSN: 0040-6031**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 072 575 B1

## Description

The present invention relates to a polypropylene composition with improved impact properties and electrical performance comprising a polypropylene homo- or copolymer as matrix phase and a silanol groups containing nanofiller strongly imbedded into a phase dispersed in said matrix phase and to the use of such a polypropylene composition as insulating material in wire and cable application.

Due to their chemical and thermal resistance as well as mechanical strength polypropylenes are used in different applications such as moulding applications, films, wires and cables or pipes. However, due to their high mechanical strength polypropylenes show a high stiffness which is not advantageous for the use as material for wire and cable applications.

The demands of the insulator material especially in an electrical power system are very high regarding mechanical and electrical properties. Key issues are flexibility, high impact resistance, heat deformation resistance, thermal expansion, creep, and electrical properties. It is well known to incorporate non-polymer reinforcement materials like mineral fillers, glass, or mineral fibers into polypropylene compositions as modifiers. However, when using such mineral fillers the mechanical performance of such polypropylene compositions is often limited due to a low adhesion between the polymeric matrix and the filler. Especially the toughness, impact strength and elongation at break is severely lowered in such applications whereas the stiffness is increased. Further is has been shown that silica particles which have a poor affinity to the polymer matrix show bad electrical behaviour.

It is known in the prior art to use glass fibre reinforcements where the reinforcement takes place by chemical coupling via surface modification of the fibre with e.g. organosilicon compounds and the addition of a compatibiliser to the polymeric phase. An example for this technology is US 5,910,523 where an aminosilane functionalised filler (e.g. silica) is reacted with carboxyl groups of a carboxylated or maleated polyolefin to form a partially or fully polyolefin functionalised filler. However, such an approach requires specific chemistry and the results in mechanical strength are still poor.

JP-A-2138353 discloses a polymer composition comprising a propylene homopolymer or an ethylene-propylene copolymer, a silane coupling agent and an inorganic filler.

It is also known to use a non-treated filler with a polymeric compatibiliser to improve the properties of a polymer, especially polypropylene composition. J. Duchet et al report in J.Appl.Polym.Sci. 65 (1997) 2481-2492 on polyethylene grafting on glass surfaces wherein chlorosilane-terminated polyethylenes with different molar masses were provided to obtain semi-crystalline polymers able to crystallise with the free chains of the polyethylene matrix and polymer chains could react with the glass surface. The technique was used for coating of silicon wafer surfaces.

Another approach in JP2004-051722 disclosing a polyolefin composite resin composition obtained by melt kneading a composition comprising (A) a phyllosilicate, (B) an interlayer dilating agent, and (C) a silane compound having an unsaturated bond and/or a reactive functional group with (D) a polyolefin resin. The melt tension and mouldability is improved by mixing such a specific filler to the polyolefin resin (D).

Cross-linkable polypropylene compositions are disclosed in EP 1 834 987 A1 showing good impact properties but still having a high stiffness.

Dispersed nanocomposites based on a thermoplastic elastomer copolyetherester (Hytrel) matrix filled with fume silica are known from Aso, O. et al., The influence of surface modification on the structure and properties of a nanosilica filled thermoplastic elastomer, Composite Science and Technology 67 (2007), 2854-2863 showing even higher stiffness.

However, even in such cases of using surface modified or unmodified fillers mixed into polyolefin resin matrices, problems regarding a highly homogeneous dispersion are still experienced. Moreover, exfoliation is not prevented sufficiently to reach the theoretical potential of the materials. Moreover, the prior art has experienced severe problems when the final polymeric composition is put under mechanical load and/or deformation.

It is hence object of the present invention to overcome the above problems and to provide a polypropylene composition having improved mechanical and electrical properties, in particular having improved impact strength at low temperatures and improved AC breakdown strength.

The present invention resides in the finding that the impact strength of a polypropylene matrix can be highly improved by introducing a dispersed phase which comprises an inorganic mineral filler with a specific surface (BET) of at least 30 $m^2/g$ containing on its surface silanol groups or precursors thereof that is chemically bonded to polymer chains of a hydrolysable silicon group-containing polyolefin in order to improve the adhesion between filler and polymer. It has further surprisingly be found that the introduction of such a dispersed phase into a polypropylene matrix does not adversely affect the electrical properties of the polypropylene composition and does not increase its stiffness.

The present invention therefore relates to a polypropylene composition comprising

- a matrix phase comprising a polypropylene homo- or copolymer (A); and

- a phase dispersed in said matrix phase comprising an olefin homo- or copolymer (B) having hydrolysable silicon-containing groups, and an inorganic filler material (C) containing on its surface silanol groups or precursors thereof, and having a specific surface BET of 30 to 300 $m^2/g$, determined according to ISO 9277:1995.

The term polyolefin, denotes an olefin homo- or copolymer or a mixture of such olefin homo- or copolymers.

Further, the term polypropylene, denotes a propylene homo- or copolymer or a mixture of such propylene homo- or copolymers.

It has surprisingly been found that such a polypropylene composition shows improved mechanical properties, as can be seen in an improved impact strength at low temperatures, accompanied by improved electrical performance, especially superior AC breakdown strength, whereas the tensile properties are not affected.

Basically, the hydrolysable silicon-group containing polyolefin (B) may form a matrix in which the particulate filler is dispersed. As the polyolefin (B) contained in or forming the base resin an ethylene or propylene homo- or copolymer may be used.

It is preferred that the inorganic filler material (C) is present in an amount of 0.5 to 10.0 wt% of the total amount of the polypropylene composition.

Further, the inorganic filler material (C) has an average particle size of 5 to 60 nm.

Preferably, filler (C) is substantially encapsulated by the hydrolysable silicon-group containing polyolefin (B). Thus, the adhesion between filler and polyolefin is guaranteed and the homogeneity of the total composition is improved.

According to the present invention the polypropylene composition comprises a matrix phase comprising a polypropylene homo- or copolymer (A) and a phase dispersed which is distributed in said matrix phase and comprises polyolefin (B) having hydrolysable silicon containing groups.

It is more preferred that the inorganic filler material (C) is present only in the dispersed phase.

Preferably, the matrix phase is present in an amount of 50 to 98 wt%, more preferably 60 to 97 wt%, most preferably 75 to 96 wt% of the total amount of the polypropylene composition.

The propylene homo- or copolymer (A) may be produced by single- or multistage process polymerisation of propylene or propylene and alphaolefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactors. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110 °C and at a pressure from 10 to 100 bar. Ziegler Natta catalysts as well as metallocene catalysts are suitable catalysts.

In a preferred embodiment, the polypropylene homo- or copolymer (A) is a heterophasic polypropylene copolymer preferably comprising an elastomeric copolymer. It is further preferred that the elastomeric copolymer comprises an ethylene-propylene elastomeric copolymer. This elastomeric copolymer is preferably present in an amount of 10 to 40 wt%, more preferably 15 to 35 wt%, most preferably 20 to 30 wt% of the total amount of the polypropylene homo- or copolymer (A).

Furthermore, the polypropylene homo- or copolymer (A) is preferably preset in an amount of 80 to 100 wt%, more preferably in an amount of 90 to 100 wt% of the total amount of the matrix phase.

It is further preferred that the polypropylene composition according to the present invention has a weight ratio of polypropylene homo- or copolymer (A) to the polyolefin (B) from 98:2 to 50:50, more preferably 97:3 to 60:40.

Furthermore, such a polypropylene composition preferably has a weight ratio of propylene homo- or copolymer matrix (A) to the dispersed phase of 98:2 to 55:45, more preferably from 97:3 to 70:30, even more preferably from 96:4 to 75:25.

The hydrolysable silicon-containing groups can be introduced e.g. by grafting the silicon compound into the polyolefin or by copolymerisation of the olefin monomers and silicon groups containing monomers. Such techniques are known e.g. from US 4,413,066, US 4,297,310, US 4,351,876, US 4,397,981, US 4,446,283 and US 4,456,704.

In the case the silicon group containing polyolefin (B) has been obtained by copolymerisation, the copolymerisation is preferably carried out with an unsaturated silicon compound represented by the formula

$$R^1SiR^2_qY_{3-q} \qquad (I)$$

wherein

$R^1$ is an ethylenically unsaturated hydrocarbyl, hydrocarbyloxy or (meth)acryloxy hydrocarbyl group,
$R^2$ is an aliphatic saturated hydrocarbyl group,
Y which may be the same or different, is a hydrolysable organic group and
q is 0, 1 or 2.

Special examples of the unsaturated silicon compound are those wherein $R^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and $R^2$, if present, is a methyl, ethyl, propyl, decyl or phenyl group.

A preferred unsaturated silicon compound is represented by the formula

$$CH_2{=}CHSi(OA)_3 \qquad (II)$$

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin and the unsaturated silane compound may be carried out under any suitable conditions resulting in the copolymerisation of the two monomers.

Moreover, the copolymerisation may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)-acrylate, (d) olefinically unsaturated carboxylic acids, such as (meth)acrylic acid, maleic acid and fumaric acid, (e) (meth)acrylic acid derivativs, such as (meth)acrylonitrile and (meth)acrylic amide, (f) vinyl ether, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)-acrylate, are preferred.

Especially preferred comonomers are butyl acrylate, ethyl acrylate and methyl acrylate.

Two or more such olefinically unsaturated compounds may be used in combination. The term "(meth)acrylic acid" is intended to embrace both acrylic acid and methacrylic acid. The comonomer content of the copolymer may amount to 70 wt% of the copolymer, preferably about 0.5 to 35 wt%, most preferably about 1 to 30 wt%.

The grafted polyolefin (B) may be produced e.g. by any of the two methods described in US 3,646,155 and US 4,117,195, respectively.

The silicon group containing polyolefin (B) according to the invention preferably comprises 0.1 to about 10.0 wt% of the silicon compound, more preferably 0.5 to 7.0 wt%, most preferably 1.0 to 4.0 wt%, based on the total polyolefin (B).

The silanol content can be adjusted by blending the grafted or copolymerised polyolefin with a non-modified polyolefin.

If the silicon groups are introduced in the polyolefin (B) by polymerisation, as described above, it is preferred that the silicon group containing polyolefin (B) has a density of 900 to 940 $kg/m^3$, more preferred of 910 to 935 $kg/m^3$, most preferred of 915 to 930 $kg/m^3$.

Furthermore, it is preferred that the silicon-grafted polyolefin (B) has a density of 920 to 960 $kg/m^3$, more preferred of 925 to 955 $kg/m^3$, most preferred of 930 to 950 $kg/m^3$.

Moreover, the used polyolefin (B) preferably is an ethylene homo- or copolymer, as a high density polyethylene, low density polyethylene, linear low density polyethylene or their like.

The polypropylene composition according to the present invention preferably comprises a silanol condensation catalyst capable of cross-linking the hydrolysable silicon group-containing polyolefin (B) and the inorganic filler material (C) containing on its surface silanol groups or precursors thereof. Thus, the cross-linking reaction may be preferably carried out at a temperature of not more than 40 °C, more preferably not more than 30 °C, even more preferred at about room temperature. The cross-linking reaction may but need not be conducted in the presence of moisture.

The cross-linking reaction may preferably be carried out by any known silanol condensation catalyst. Conventional catalysts are for example tin-organic compounds such as dibutyl tin dilaurate (DBTDL) and dioctyl-tin-dilaurat (DOTL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463.

It is preferred that the acidic silanol condensation catalyst is typically selected from the group comprising Lewis acids, inorganic acids such as sulphuric acid and hydrochloric acid, and organic acids such as citric acid, stearic acid, acetic acid, sulfonic acid and alkanoic acids as dodecanoic acid, organic bases, carboxylic acids and organometallic compound including organic titanates and complexes or carboxylates of lead, cobalt, iron, nickel, zinc and tin or a precursor of any of the compounds mentioned.

Further preferred, the aromatic organic sulfonic acid comprises the structural element:

$$Ar(SO_3H)_x \qquad (III)$$

with Ar being an aryl group which may be substituted or non-substituted, and x being at least 1.

The organic aromatic sulfonic acid silanol condensation catalyst may comprise the structural unit according to formula (III) one or several times, e.g. two or three times. For example, two structural units according to formula (III) may be linked to each other via a bridging group such as an alkylene group.

Preferably, Ar is a aryl group which is substituted with at least one $C_4$- to $C_{30}$-hydrocarbyl group, more preferably $C_4$- to $C_{30}$-alkyl group.

Aryl group Ar preferably is a phenyl group, a naphthalene group or an aromatic group comprising three fused rings such as phenantrene and anthracene.

Preferably, in formula (III) x is 1, 2 or 3, and more preferably x is 1 or 2.

Furthermore, preferably the compound used as organic aromatic sulfonic acid silanol condensation catalyst has from 10 to 200 C-atoms, more preferably from 14 to 100 C-atoms.

In one preferred embodiment, Ar is a hydrocarbyl substituted aryl group and the total compound containing 14 to 28 carbon atoms, and still further preferred, the Ar group is a hydrocarbyl substituted benzene or naphthalene ring, the hydrocarbyl radical or radicals containing 8 to 20 carbon atoms in the benzene case and 4 to 18 atoms in the naphthalene case.

It is further preferred that the hydrocarbyl radical is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds are dodecyl benzene sulfonic acid and tetrapropyl benzene sulfonic acid.

The silanol condensation catalyst may also be precursor of the sulfonic acid compound, including all its preferred embodiments mentioned, i.e. a compound that is converted by hydrolysis to such a compound. Such a precursor is for example the acid anhydride of a sulfonic acid compound, or a sulfonic acid that has been provided with a hydrolysable protective group, as e.g. an acetyl group, which can be removed by hydrolysis.

In a second preferred embodiment, the sulfonic acid catalyst is selected from those as described in EP 1 309 631 and EP 1 309 632, namely

a) a compound selected from the group of

(i) an alkylated naphthalene monosulfonic acid substituted with 1 to 4 alkyl groups wherein each alkyl group is a linear or branched alkyl with 5 to 40 carbons with each alkyl group being the same or different and wherein the total number of carbons in the alkyl groups is in the range of 20 to 80 carbons;

(ii) an arylalkyl sulfonic acid wherein the aryl is phenyl or naphthyl and is substituted with 1 to 4 alkyl groups wherein each alkyl-group is a linear or branched alkyl with 5 to 40 carbons with each alkyl group being the same or different and wherein the total number of carbons in the alkyl groups is in the range of 12 to 80;

(iii) a derivative of (i) or (ii) selected from the group consisting of an anhydride, an ester, an acetylate, an epoxy blocked ester and an amine salt thereof which is hydrolysable to the corresponding alkyl naphthalene monosulfonic acid or the arylalkyl sulfonic acid;

(iv) a metal salt of (i) or (ii) wherein the metal ion is selected from the group consisting of copper, aluminium, tin and zinc; and

b) a compound selected from the group of

(i) an alkylated aryl disulfonic acid selected from the group consisting of the structure (IV):

(IV) 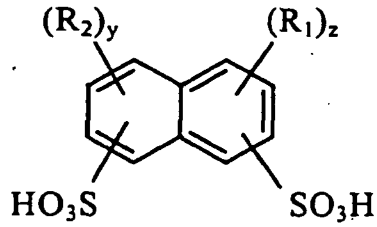

and the structure (V):

(V) 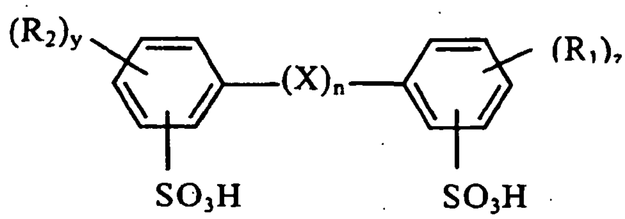

wherein each of $R_1$ and $R_2$ is the same or different and is a linear or blanched alkyl group with 6 to 16 carbons, y is 0 to 3, z is 0 to 3 with the proviso that y + z is 1 to 4, n is 0 to 3, X is a divalent moiety selected from the group consisting of $-C(R_3)(R_4)-$, wherein each of $R_3$ and $R_4$ is H or independently a linear or branched alkyl group of 1 to 4 carbons and n is 1; -C(=O)-, wherein n is 1; -S-, wherein n is 1 to 3 and $-S(O)_2-$, wherein n is 1; and

(ii) a derivative of (i) selected from the group consisting of the anhydrides, esters, epoxy blocked sulfonic acid esters, acetylates, and amine salts thereof which is a hydrolysable to the alkylated aryl disulfonic acid,

together with all preferred embodiments of those sulfonic acids as described in the mentioned European Patents.

Preferably, in the polypropylene composition the silanol condensation catalyst is present in an amount of 0.0001 to 6.0 wt%, more preferably of 0.001 to 2.0 wt%, and most preferably 0.02 to 0.5 wt%. It may also be used in an amount of from 0.05 to 1.0 wt%.

Preferably, the cross-linkable polyolefin (B) comprises, still more preferably consists of, a polyethylene containing hydrolysable silicon groups.

The hydrolysable silicon groups may be introduced into the polyolefin by copolymerisation of e.g. ethylene monomers with silicon group containing comonomers or by grafting, i.e. by chemical modification of the polymer by addition of silicon groups mostly in a radical reaction. Both techniques are well known in the art.

As inorganic filler material (C) any type of silanol group-containing inorganic mineral filler may be used. However, it is preferred to use a particulate or plate-like filler which is a silica.

The inorganic filler material (C) preferably has an average particle size of 5 to 60 nm, more preferably 7 to 55 nm, still more preferably 10 to 50 nm most preferably 12 to 42 nm.

Further, the inorganic filler material (C) has a specific surface (BET) of 30 to 300 $m^2/g$, preferably 35 to 250 $m^2/g$, still more preferably 38 to 225 $m^2/g$, and most preferably 40 to 200 $m^2/g$, determined according to ISO 9277:1995.

The inorganic filler material (C) is preferably present in an amount of 0.5 to 10.0 wt%, more preferably 1.0 to 7.5 wt%, still more preferably 1.5 to 6.0 wt%, most preferably 2.0 to 5.0 wt% of the total amount of the polypropylene composition.

In contrast to organically modified filler particles combined with a compatibiliser, the inventive polypropylene compositions include an inorganic mineral filler with silanol groups on their surfaces. Instead a group hydrolysable to such a silanol group may be present on the surface of the filler. Such groups are referred herein as "precursors" of silanol groups. These may be coupled by a suitable condensation reaction to hydrolysable silicon groups on the polymer chains of polyolefin (A), preferably with the use of a suitable silanol condensation catalyst as specified above. The reaction may but need not be conducted in the presence of moisture. However, it is preferred that the composition is subjected to the presence of moisture.

Moreover, the polypropylene composition according to the invention may further contain various additives,

such as miscible thermoplastics, further stabilizers, lubricants, fillers, colouring agents and foaming agents, which can be added before during or after the blending step (i) to the composition.

Such a cross-linked polypropylene composition according to the invention is obtainable by a process comprising the steps of:

(i) blending (A), (B) and (C) as defined above, together with a silanol condensation catalyst,

(ii) granulation of the blend of step (i) in a water bath, and afterwards

(iii) cross-linking the obtained heterophasic polypropylene composition at 10 to 40°C under a humidity of below 85 % to a cross-linking degree of at least 30 %, based on the total polyolefin (B).

The selective cross-linking of the polyolefin phase allows stabilising of the phase morphology of the polypropylenes composition. The resulting polypropylene compositions according to the present invention are additional characterised by good hot wire deformation (HWT) performance, a low ash content, good relative permittivity at 20°C whereas the tensile properties are not increased.

It will be shown in the example section below that the reinforced polyolefin compositions according to the present invention show highly improved mechanical properties such as Charpy notched impact strength accompanied by good properties for tensile modulus, tensile strain at break and hot wire deformation (HWT) and a low ash content. It was further surprisingly found that the inventive polypropylene compositions showed a significantly improved AC breakdown strength together with good relative permittivity.

Thus, the reinforced polypropylene compositions according to the present invention preferably have an impact strength at +23°C of at least 30 $kJ/m^2$, more preferably 40 $kJ/m^2$, most preferably 45 $kJ/m^2$, and at -20°C of at least 3.0 $kJ/m^2$, more preferably 3.2 $kJ/m^2$, most preferably 3.5 $kJ/m^2$ in a Charpy notched impact strength test.

Moreover, the inventive polypropylene compositions preferably have a tensile modulus of at least 300 MPa, more preferably at least 350 MPa, most preferably at least 370 MPa and a tensile strain at break of at least 300 %, more preferably at least 400 %, still more preferably at least 500 %, most preferably at least 540 %.

Further, the polypropylene compositions according to the invention have an AC breakdown strength of at least 70 kV/mm, preferably 73 kV/mm, most preferably 75 kV/mm.

It has further surprisingly be found that the amount of xylene cold solubles is higher than the amount of inorganic filler material (C) within the polypropylene composition.

In a further aspect of the present invention the inventive polypropylene compositions can be used for the production of an article, preferably in wire and cable applications, more preferably as an insulating layer of a wire or cable.

The present invention is further dedicated to such an article comprising such a polypropylene composition, preferably to a wire or cable, more preferably multi-layered cables like electric power cables most preferably to an insulating layer of a wire or cable.

A typical electric power cable generally comprises one or more conductors in a cable core that is surrounded by several layers of polymeric materials including an inner semiconducting layer, followed by an insulating layer, and then an outer semiconducting layer. These layers are normally cross-linked. To these layers, further layers may be added, such as a metallic tape or wire shield, and finally a jacketing layer. The layers of the cable are based on different types of polymers.

The inventive polypropylene composition is preferably used for the production of the insulating layer of an electric power cable.

In the following the present invention is further illustrated by means of examples.

Examples:

1. Definitions:

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg, the $MFR_5$ of polyethylene is measured at a temperature 190 °C and a load of 5 kg and the $MFR_2$ of polyethylene at a temperature 190 °C and a load of 2.16 kg.

b) Xylene hot insolubles (XHU)

The content of xylene hot insolubles is determined by extracting 1 g of finely cut polymer sample with 500 ml xylene in a Soxleth extractor for 48 hours at the boiling temperature. The remaining solid amount is dried at 90 °C and weighed for determining the insolubles amount.

c) Xylene cold solubles (XCS)

2.0 g of polymer is dissolved in 250 ml p-xylene at 135 °C under agitation. After 30 minutes the solution is allowed to cool for 15 minutes at ambient temperature and then allowed to settle for 30 minutes at 25 °C. The solution is filtered with filter paper into two 100 ml flasks.

The solution from the first 100 ml vessel is evaporated in nitrogen flow and the residue is dried under vacuum at 90 °C until constant weight is reached.

XCS% = (100·m·Vo)/(mo·v); mo = initial polymer amount (g); m = weight of residue (g); Vo = initial volume (ml); v = volume of analysed sample (ml).

d) Specific surface area (BET)

The specific surface area BET is determined according to ISO 9277:1995. $N_2$ is used as adsorption gas.

e) Average particle size

The average particle (d50) size is calculated from the BET surface area according to the following formula :

$$d50 = \frac{6}{\rho \cdot S(BET)}$$

with ρ = density and S(BET) = BET surface area

f) Charpy notched impact test

The impact strength is determined as Charpy Impact Strength according to ISO 179 1 eA at +23°C and at -20 °C on injection moulded specimens of 80x10x4 $mm^3$.

g) Tensile test

Tensile tests are performed according to ISO 527 using injection moulded specimen as described in EN ISO 1873-2 (dog bone shape, 4 mm thickness).

Tensile modulus (E-modulus) was also determined according to ISO 527 and calculated from the linear part of the tensile test results.

h) Density

The density is measured according to ISO 1183.

i) Hot wire deformation test (HWT)

This test is performed to demonstrate the resistance of a cable material to short heat load situations similar to the short circuit test of standard in IEC811-3-1. Instead of using a complete insulated cable as in said test, a copper conductor with 1.5 $mm^2$ cross section area and 210 mm length (1) is used in combination with a compression moulded plate of the insulation material (2). The conductor is mounted in between two supports and connected to a direct current (DC) welding generator (4) (see Fig. 1), all kept initially at ambient temperature (+23°C). When a current of 75 A is applied, the temperature on the conductor increases 60°C every 10 sec during the first minute of the test, verified by measuring the temperature with a thermocouple (5) attached to the conductor.

The insulation material (polymer) is compression moulded into a plate of 1.25 mm thickness, from which square

specimen of 20 x 20 mm are cut and placed between the conductor and the same knife setup (6) as in IEC811-3-1, which knife setup is loaded with 121 g (3), calculated from the thickness of insulation in IEC811-3-1. The angle between knife blade and conductor is set to 90°. To register when the knife gets in contact with the conductor, a control circuit (7) between the conductor and the knife is set up to indicate this contact with a beep signal.

For performing the actual test, the DC welding generator is started simultaneously with a timer of a precision better than 1 second. Both time and temperature of the beep signal, i.e. the penetration of the knife through the insulation material, are noted. To improve the precision, five repetitions of the test are performed for each type of material and an arithmetical average for both time and temperature is calculated.

In practice, two main averages over the Heat shock test according to IEC811-3-1 have been identified, namely the fact that it is a more realistic test for cable applications since heat is generated at the conductor in contact with the testing probe and that the failure of insulation is identified via a realistic temperature ramp.

A scheme of the HWT test is shown is Fig. 1.

j) Electrical performance

The 50 Hz relative permittivity and the dissipation factor are measured according to an internal method that relates to ASTM D150-1995 (Instrument: TETTEX 2914, electrode pressure: 6 N/cm$^2$, test voltage: 500 V) on 3 mm compression moulded plaques at room temperature (20°C).

k) AC breakdown strength

The AC breakdown strength is measured according to an internal method that relates to IEC 60243 PT1 (1988) (electrodes according to IEC 60243 PT1 (1988), frequency: 50 Hz, plate dimensions: 50 $\pm$ 5 mm x 50 $\pm$ 5 mm x 0.3 $\pm$ 0.05 mm, insulation oil: Shell Diala, voltage ramp: 2 kV / s beginning from 0 kV, limiting current: 5 mA).

l) Ash content

Ash content is determined according to ISO 3451/1-1981 by igniting and ashing a sample of 5 g in pellet form in a muffle furnace up to 900°C and is expressed in weight%.

2. Materials

The components - propylene homo- or copolymer, inorganic filler material and polyethylene-vinylsilane-copolymer or grafting product and the catalyst master batch (Borealis polyethylene CAT-MB50 with dibutyltin dilaurate as catalytically active substance), were combined in a twin screw extruder (PRISM TSE24, L/D ratio 40) with two high intensity mixing segments at temperatures between 190 and 220°C at a through put of 10 kg/h and a screw speed of 50 rpm. The material was extruded to two circular dies of 3 mm diameter into water base with a residence time of at least 30 sec for solidifying the melt standard, which was consequently granulated. For the period until melt processing, the resulting compound was stored at an ambient temperature of +23 $\pm$ 2 °C and normal humidity (50 $\pm$ 5%).

Compounds:

Silicon group containing polymer:

High-pressure low density ethylene terpolymer (LE4481) with a vinyltrimethylsilane content of 1.75 wt% and a butylacrylate content of about 17 wt% for cable insulation with an MFR (190°C/2.16 kg) of 5 g / 10 min, and a density of 927 kg/m$^3$, distributed by Borealis Polyolefine GmbH.

Polypropylene copolymer:

Homo/Random/Block polypropylene copolymer (homopolymer produced in a first loop rector, the propylene/ethylene random copolymer produced in a downstream first gas phase reactor, the ethylene/propylene rubber produced in a second gas phase reactor) with a C2/C3 ratio of 460 mol/kmol, a content of xylene cold solubles of 28 wt% and a MFR (230°C/2.16 kg) of 3.5 g/10 min.

Aerosil® 200:

Hydrophilic fumed silica with a specific surface area (BET) of 200 $\pm$ 15 m$^2$/g, an average primary particle size

of 12 nm and an $SiO_2$ content of at least 99.8 wt%, distributed by Degussa GmbH.

Aerosil® OX50:

Hydrophilic pyrogenic silica with a specific surface area (BET) of 50 ± 15 $m^2/g$, an average primary particle size of 40 nm and an $SiO_2$ content of at least 99.8 wt%, distributed by Degussa.

Example 1:

89.75 wt% polypropylene copolymer as matrix phase is used together with 5 wt% silicon group containing polymer, 5 wt% Aerosil® 200, and 0.25 wt% catalyst masterbatch CAT-MB50.

Example 2:

95.75 wt% polypropylene copolymer as matrix phase is used together with 2 wt% silicon group containing polymer, 2 wt% Aerosil® OX50, and 0.25 wt% catalyst masterbatch CAT-MB50.

Example 3:

92.75 wt% polypropylene copolymer as matrix phase is used together with 2 wt% silicon group containing polymer, 5 wt% Aerosil® 200, and 0.25 wt% catalyst masterbatch CAT-MB50.

Comparative Example 1:

Only polypropylene copolymer is used.

Comparative Example 2:

95 wt% polypropylene copolymer as matrix phase is used together with 5 wt% Aerosil® 200.

Comparative Example 3:

98 wt% polypropylene copolymer as matrix phase is used together with 2 wt% Aerosil® OX50.

Comparative Example 4:

95 wt% polypropylene copolymer as matrix phase is used together with 5 wt% Aerosil® OX50.
The results are shown in Table 1 below.

Table 1

| | Filler | Amount Filler [wt%] | Amount PE-SiOX [wt%] | Tensile Modulus [Mpa] | Tensile Strain at break [%] | Charpy NIS +23°C [kJ/m$^2$] | Charpy NIS -20°C [kJ/m$^2$] | HWT [°C] | AC breakdown strength [kV/mm] | Relative permittivity 20°C [-] | Ash [%] | XHU [%] |
|---|---|---|---|---|---|---|---|---|---|---|---|---|
| Comp1 | --- | 0 | 0 | 465 | 500 | 61 | 2.0 | 159 | 75.8 | 2.13 | - | - |
| Comp2 | Aerosil200 | 5 | 0 | 528 | 560 | 40 | 2.0 | 203 | 80.0. | 2.14 | 3.9 | 3.9 |
| Ex1 | Aerosil200 | 5 | 5 | 422 | 624 | 47 | 4.1 | 215 | 81.9 | 2.14 | 4.4 | 6.9 |
| Comp3 | AerosilOX50 | 2 | 0 | 450 | 506 | 51 | 2.1 | 200 | 87.9 | 2.13 | 1.9 | 1.9 |
| Ex2 | AerosilOX50 | 2 | 2 | 374 | 545 | 54 | 3.6 | 213 | 88.5 | 2.13 | 2.0 | 3.0 |
| Comp4 | AerosilOX50 | 5 | 0 | 446 | 547 | 41 | 2.1 | 206 | 73.1 | 2.16 | 4.7 | 4.7 |
| Ex3 | AerosilOX50 | 5 | 2 | 402 | 592 | 52 | 3.8 | 211 | 78.0 | 2.16 | 4.5 | 5.5 |

PE-SiOX = silicon group containing ethylene polymer; Charpy NIS = Charpy notched impact strength; HWT = Hot wire deformation test; XHU = xylene hot insoluble fraction

## Claims

1. A polypropylene composition comprising

   - a matrix phase comprising a polypropylene homo- or copolymer (A); and
   - a phase dispersed in said matrix phase comprising an olefin homo- or copolymer (B) having hydrolysable silicon-containing groups, and an inorganic filler material (C) containing on its surface silanol groups or precursors thereof, and having a specific surface BET of 30 to 300 $m^2/g$, determined according to ISO 9277:1995.

2. The polypropylene composition according to claim 1, wherein the inorganic filler material (C) is present in an amount of 0.5 to 10 wt% of the total amount of the polypropylene composition.

3. The polypropylene composition according to any of the preceding claims, wherein the inorganic filler material (C) has an average particle size of 5 to 60 nm.

4. The polypropylene composition according to any of the preceding claims, wherein said composition further comprises a silanol condensation catalyst.

5. The polypropylene composition according to any of the preceding claims, wherein the silanol condensation catalyst is selected from tin-organic compounds or acidic silanol condensation catalysts.

6. The polypropylene composition according to any of the preceding claims, wherein the matrix phase is present in an amount of 50 to 98 wt% of the total amount of the polypropylene composition.

7. The polypropylene composition according to any of the preceding claims, wherein the polypropylene homo- or copolymer (A) is a heterophasic polypropylene copolymer comprising an elastomeric copolymer.

8. The polypropylene composition according to claim 7, wherein the elastomeric copolymer comprises an ethylene-propylene elastomeric copolymer.

9. The polypropylene composition according to claims 7 or 8, wherein the elastomeric copolymer is present in an amount of 10 to 40 wt% of the total amount of the polypropylene homo- or copolymer (A).

10. The polypropylene composition according to any of the preceding claims, wherein the polypropylene homo- or copolymer (A) is present in an amount of 80 to 100 wt% of the total amount of the matrix phase.

11. The polypropylene composition according to any of the preceding claims, wherein the polypropylene composition has a weight ratio of polypropylene homo- or copolymer (A) to the polyolefin (B) from 98:2 to 50:50.

12. The polypropylene composition according to any of the preceding claims, wherein the hydrolysable silicon group containing olefin homo- or copolymer (B) is an ethylene homo- or copolymer.

13. The polypropylene composition according to any of the preceding claims, wherein in the hydrolysable silicon group containing olefin homo- or copolymer (B) the silicon-containing groups are present in an amount of 0.1 to 10.0 wt% of component (B).

14. The polypropylene composition according to any of the preceding claims, wherein the inorganic filler material (C) is a silica.

15. The polypropylene composition according to any of the preceding claims, wherein the inorganic filler material (C) is present in an amount of 1.0 to 7.5 wt% of the total amount of the polypropylene composition.

16. The polypropylene composition according to any of the preceding claims, wherein the composition has been subjected to the presence of moisture.

17. The polypropylene composition according to any of the preceding claims, wherein the composition has a tensile modulus of at least 300 MPa, measured according to ISO 527-3.

**18.** The polypropylene composition according to any of the preceding claims, wherein the composition has a tensile strain at break of at least 300 %, measured according to ISO 527-3.

**19.** The polypropylene composition according to any of the preceding claims, wherein the composition has an impact strength at + 23 °C of at least 30 kJ/$m^2$ in a Charpy notched test according to ISO 179 1 eA.

**20.** The polypropylene composition according to any of the preceding claims, wherein the composition has an impact strength at -20 °C of at least 3.0 kJ/$m^2$, in a Charpy notched test according to ISO 179 1 eA.

**21.** The polypropylene composition according to any of the preceding claims, wherein the composition has an AC breakdown strength of at least 70 kV/mm, measured according to an internal method related to IEC 60243 PT1 (1988).

**22.** The polypropylene composition according to any of the preceding claims, wherein the amount of xylene cold solubles is higher than the amount of inorganic filler material (C) within the polypropylene composition.

**23.** Article comprising a polypropylene composition according to claims 1 to 22.

**24.** Article according to claim 23, wherein the article is a wire or cable.

**25.** Article according to claim 23 or 24, wherein the article is an insulation layer of a wire or cable.

**26.** The use of a polypropylene composition according to claims 1 to 22 for the production of an article.

**27.** Use according to claim 26, wherein the article is an insulating layer of a wire or cable.

**Patentansprüche**

**1.** Polypropylenzusammensetzung, umfassend:

- eine Matrixphase, die ein Polypropylenhomo- oder -copolymer (A) umfaßt; und
- eine in dieser Matrixphase dispergierte Phase, die ein Olefinhomo- oder -copolymer (B) mit hydrolysierbaren siliciumhaltigen Gruppen und einen anorganischen Füllstoff (C) enthält, der auf seiner Oberfläche Silanolgruppen oder Vorläufer davon enthält und eine spezifische Oberfläche BET von 30 bis 300 $m^2$/g aufweist, und zwar gemäß ISO 9277:1995 bestimmt.

**2.** Polypropylenzusammensetzung nach Anspruch 1, wobei der anorganische Füllstoff (C) in einer Menge von 0,5 bis 10 Gew.-% der Gesamtmenge der Polypropylenzusammensetzung vorliegt.

**3.** Polypropylenzusammensetzung nach einem der vorstehenden Ansprüche, wobei der anorganische Füllstoff (C) eine mittlere Partikelgröße von 5 bis 60 nm aufweist.

**4.** Polypropylenzusammensetzung nach einem der vorstehenden Ansprüche, wobei die Zusammensetzung ferner einen Silanolkondensationskatalysator umfaßt.

**5.** Polypropylenzusammensetzung nach einem der vorstehenden Ansprüche, wobei der Silanolkondensationskatalysator aus organischen Zinnverbindungen oder sauren Silanolkondensationskatalysatoren ausgewählt ist.

**6.** Polypropylenzusammensetzung nach einem der vorstehenden Ansprüche, wobei die Matrixphase in einer Menge bis 50 bis 98 Gew.-% der Gesamtmenge der Polypropylenzusammensetzung vorliegt.

**7.** Polypropylenzusammensetzung nach einem der vorstehenden Ansprüche, wobei das Polypropylenhomo- oder -copolymer (A) ein Polypropylencopolymer mit verschiedenen Phasen ist, das ein elastomeres Copolymer umfaßt.

**8.** Polypropylenzusammensetzung nach Anspruch 7, wobei das elastomere Copolymer ein elastomeres Ethylen-Propylen-Copolymer umfaßt.

**9.** Polypropylenzusammensetzung nach Anspruch 7 oder 8, wobei das elastomere Copolymer in einer Menge von 10

bis 40 Gew.-% der Gesamtmenge des Polypropylenhomo- oder -copolymers (A) vorliegt.

**10.** Polypropylenzusammensetzung nach einem der vorstehenden Ansprüche, wobei das Polypropylenhomo- oder -copolymer (A) in einer Menge von 80 bis 100 Gew.-% der Gesamtmenge der Matrixphase vorliegt.

**11.** Polypropylenzusammensetzung nach einem der vorstehenden Ansprüche, wobei die Polypropylenzusammensetzung ein Gewichtsverhältnis zwischen dem Polypropylenhomo- oder -copolymer (A) und dem Polyolefin (B) von 98:2 bis 50:50 aufweist.

**12.** Polypropylenzusammensetzung nach einem der vorstehenden Ansprüche, wobei das hydrolysierbare Siliciumgruppen enthaltende Olefinhomo- oder -copolymer (B) ein Ethylenhomo- oder -copolymer ist.

**13.** Polypropylenzusammensetzung nach einem der vorstehenden Ansprüche, wobei in dem hydrolysierbare Siliciumgruppen enthaltenden Olefinhomo- oder -copolymer (B) die siliciumhaltigen Gruppen in einer Menge von 0,1 bis 10,0 Gew.-% der Komponente (B) vorliegen.

**14.** Polypropylenzusammensetzung nach einem der vorstehenden Ansprüche, wobei der anorganische Füllstoff (C) Siliciumdioxid ist.

**15.** Polypropylenzusammensetzung nach einem der vorstehenden Ansprüche, wobei der anorganische Füllstoff (C) in einer Menge von 1,0 bis 7,5 Gew.-% der Gesamtmenge der Polypropylenzusammensetzung vorliegt.

**16.** Polypropylenzusammensetzung nach einem der vorstehenden Ansprüche, wobei die Zusammensetzung mit Feuchtigkeit in Kontakt gebracht worden ist.

**17.** Polypropylenzusammensetzung nach einem der vorstehenden Ansprüche, wobei die Zusammensetzung einen Zugmodul von mindestens 300 MPa aufweist, und zwar gemäß ISO 527-3 gemessen.

**18.** Polypropylenzusammensetzung nach einem der vorstehenden Ansprüche, wobei die Zusammensetzung eine Reißfestigkeit von mindestens 300 % aufweist, und zwar gemäß ISO 527-3 gemessen.

**19.** Polypropylenzusammensetzung nach einem der vorstehenden Ansprüche, wobei die Zusammensetzung bei einem Charpy-Kerbschlagzähigkeitstest gemäß ISO 179 1eA eine Kerbschlagzähigkeit bei +23°C von mindestens 30 $kJ/m^2$ aufweist.

**20.** Polypropylenzusammensetzung nach einem der vorstehenden Ansprüche, wobei die Zusammensetzung bei einem Charpy-Kerbschlagzähigkeitstest gemäß ISO 179 1eA eine Kerbschlagzähigkeit bei -20°C von mindestens 3,0 $kJ/m^2$ aufweist.

**21.** Polypropylenzusammensetzung nach einem der vorstehenden Ansprüche, wobei die Zusammensetzung eine Wechselstrom-Durchschlagsfestigkeit von mindestens 70 kV/mm aufweist, und zwar gemäß einem internen Verfahren gemessen, das sich auf IEC 60243 PT1 (1988) bezieht.

**22.** Polypropylenzusammensetzung nach einem der vorstehenden Ansprüche, wobei die Menge der in Xylol kaltlöslichen Bestandteile größer als die Menge des anorganischen Füllstoffs (C) innerhalb der Polypropylenzusammensetzung ist.

**23.** Gegenstand, der Polypropylenzusammensetzung nach den Ansprüchen 1 bis 22 umfaßt.

**24.** Gegenstand nach Anspruch 23, wobei der Gegenstand ein Draht oder Kabel ist.

**25.** Gegenstand nach Anspruch 23 oder 24, wobei der Gegenstand eine Isolationsschicht eines Drahts oder Kabels ist.

**26.** Verwendung einer Polypropylenzusammensetzung nach den Ansprüchen 1 bis 22 für die Herstellung eines Gegenstandes.

**27.** Verwendung nach Anspruch 26, wobei der Gegenstand eine isolierende Schicht eines Drahts oder Kabels ist.

## Revendications

1. Composition de polypropylène comprenant :

   une phase matricielle comprenant un homo ou copolymère de polypropylène (A) ; et
   une phase dispersée dans ladite phase matricielle comprenant un homo ou copolymère d'oléfine (B) ayant des groupes contenant du silicium hydrolysables, et un matériau de charge inorganique (C) contenant à sa surface des groupes silanols ou des précurseurs de ces derniers, et ayant une surface spécifique BET de 30 à 300 $m^2/g$, déterminée selon la norme ISO 9277 : 1995.

2. Composition de polypropylène selon la revendication 1, dans laquelle le matériau de charge inorganique (C) est présent en une quantité de 0,5 % à 10 % en poids par rapport à la quantité totale de la composition de polypropylène.

3. Composition de polypropylène selon l'une quelconque des revendications précédentes, dans laquelle le matériau de charge inorganique (C) possède une taille de particules moyenne de 5 à 60 nm.

4. Composition de polypropylène selon l'une quelconque des revendications précédentes, dans laquelle ladite composition comprend en outre un catalyseur de condensation de silanol.

5. Composition de polypropylène selon l'une quelconque des revendications précédentes, dans laquelle le catalyseur de condensation de silanol est choisi parmi les composés organo-étain ou les catalyseurs de condensation de silanol acides.

6. Composition de polypropylène selon l'une quelconque des revendications précédentes, dans laquelle la phase matricielle est présente en une quantité de 50 % à 98 % en poids de la quantité totale de la composition de polypropylène.

7. Composition de polypropylène selon l'une quelconque des revendications précédentes, dans laquelle l'homo ou le copolymère de polypropylène (A) est un copolymère de polypropylène hétérophasique comprenant un copolymère élastomère.

8. Composition de polypropylène selon la revendication 7, dans laquelle le copolymère élastomère comprend un copolymère élastomère d'éthylène - propylène.

9. Composition de polypropylène selon les revendications 7 ou 8, dans laquelle le copolymère élastomère est présent en une quantité de 10 % à 40 % en poids de la quantité totale de l'homo ou du copolymère de polypropylène (A).

10. Composition de polypropylène selon l'une quelconque des revendications précédentes, dans laquelle l'homo ou le copolymère de polypropylène (A) est présent en une quantité de 80 % à 100 % en poids par rapport à la quantité totale de la phase matricielle.

11. Composition de polypropylène selon l'une quelconque des revendications précédentes, dans laquelle la composition de polypropylène possède un rapport en poids de l'homo ou du copolymère de polypropylène (A) par rapport à la polyoléfine (B) de 98 : 2 à 50 : 50.

12. Composition de polypropylène selon l'une quelconque des revendications précédentes, dans laquelle l'homo ou le copolymère d'oléfine contenant des groupes de silicium hydrolysables (B) est un homo ou copolymère d'éthylène.

13. Composition de polypropylène selon l'une quelconque des revendications précédentes, dans laquelle dans l'homo ou le copolymère d'oléfine contenant des groupes de silicium hydrolysables (B) les groupes contenant du silicium sont présents en une quantité de 0,1 % à 10,0 % en poids du composant (B).

14. Composition de polypropylène selon l'une quelconque des revendications précédentes, dans laquelle le matériau de charge inorganique (C) est une silice.

15. Composition de polypropylène selon l'une quelconque des revendications précédentes, dans laquelle le matériau de charge inorganique (C) est présent en une quantité de 1,0 % à 7,5 % en poids de la quantité totale de la composition de polypropylène.

**16.** Composition de polypropylène selon l'une quelconque des revendications précédentes, dans laquelle la composition a été exposée à la présence d'humidité.

**17.** Composition de polypropylène selon l'une quelconque des revendications précédentes, dans laquelle la composition possède un module de traction d'au moins 300 MPa, mesuré selon la norme ISO 527-3.

**18.** Composition de polypropylène selon l'une quelconque des revendications précédentes, dans laquelle la composition présente une tension de traction à la rupture d'au moins 300 %, mesurée selon la norme ISO 527-3.

**19.** Composition de polypropylène selon l'une quelconque des revendications précédentes, dans laquelle la composition possède une résistance aux chocs à +23° C d'au moins 30 $kJ/m^2$ dans un essai de résilience Charpy selon la norme ISO 179 1 eA.

**20.** Composition de polypropylène selon l'une quelconque des revendications précédentes, dans laquelle la composition possède une résistance aux chocs à -20°C d'au moins 3,0 $kJ/m^2$, dans un essai de résilience Charpy selon la norme ISO 179 1eA.

**21.** Composition de polypropylène selon l'une quelconque des revendications précédentes, dans laquelle la composition possède une résistance au claquage en courant alternatif d'au moins 70 kV/mm, mesurée selon un procédé interne associé à la norme IEC 60243 PT1 (1988).

**22.** Composition de polypropylène selon l'une quelconque des revendications précédentes, dans laquelle la quantité de produits solubles à froid dans le xylène est supérieure à la quantité de matériau de charge inorganique (C) dans la composition de polypropylène.

**23.** Article comprenant une composition de polypropylène selon les revendications 1 à 22.

**24.** Article selon la revendication 23, dans lequel l'article est un fil ou un câble.

**25.** Article selon la revendication 23 ou 24, dans lequel l'article est une couche isolante d'un fil ou d'un câble.

**26.** Utilisation d'une composition de polypropylène selon les revendications 1 à 22 pour la production d'un article.

**27.** Utilisation selon la revendication 26, dans laquelle l'article est une couche isolante d'un fil ou d'un câble.

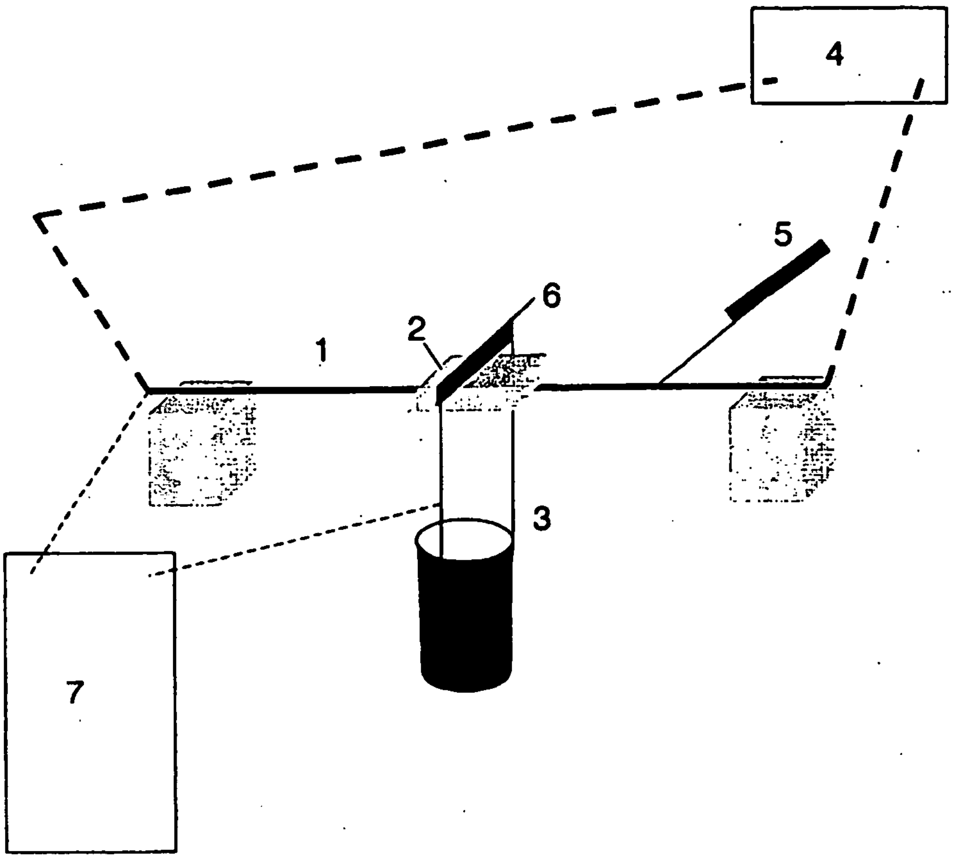


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5910523 A
- JP 2138353 A
- JP 2004051722 A
- EP 1834987 A1
- US 4413066 A
- US 4297310 A
- US 4351876 A
- US 4397981 A
- US 4446283 A
- US 4456704 A
- US 3646155 A
- US 4117195 A
- WO 9517463 A
- EP 1309631 A
- EP 1309632 A


### Non-patent literature cited in the description


- **J. Duchet et al.** *J.Appl.Polym.Sci.,* 1997, vol. 65, 2481-2492
- **Aso, O. et al.** The influence of surface modification on the structure and properties of a nanosilica filled thermoplastic elastomer. *Composite Science and Technology,* 2007, vol. 67, 2854-2863